(19) Europäisches Patentamt
European Patent Office
Office européen des brevets

(11) **EP 2 120 082 A1**

(12) **EUROPEAN PATENT APPLICATION**
published in accordance with Art. 153(4) EPC

(43) Date of publication:
**18.11.2009 Bulletin 2009/47**

(51) Int Cl.:
*G02B 26/00* (2006.01)     *G01J 3/26* (2006.01)
*G02B 5/28* (2006.01)

(21) Application number: **08711136.5**

(22) Date of filing: **12.02.2008**

(86) International application number:
**PCT/JP2008/052278**

(87) International publication number:
**WO 2008/099817 (21.08.2008 Gazette 2008/34)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **13.02.2007 JP 2007032249**

(71) Applicant: **Olympus Corporation**
**Tokyo 151-0072 (JP)**

(72) Inventor: **MATSUMOTO, Shinya**
**Tokyo 151-0072 (JP)**

(74) Representative: **von Hellfeld, Axel**
**Wuesthoff & Wuesthoff**
**Patent- und Rechtsanwälte**
**Schweigerstrasse 2**
**81541 München (DE)**

(54) **VARIABLE SPECTRAL ELEMENT**

(57)    Desired spectral characteristics are obtained by bringing reflection films sufficiently close together while avoiding optical contact between the reflection films. Provided is a variable spectral element (1) that includes a pair of optical substrates (2,3) that oppose each other with a gap therebetween; two mutually opposing reflection films (5) respectively disposed on the opposing surfaces of the optical substrates (2, 3); two mutually opposing sensor electrodes (6) that are disposed respectively on the sides where the reflection films (5) are disposed, and that form a distance sensor that detects the distance between the optical substrates (2,3); and an actuator (4) that changes the distance between the optical substrates (2, 3) by relatively moving the optical substrates (2, 3); wherein the distance between the opposing surfaces of the two reflection films (5) is larger than the distance between the opposing surfaces of the two sensor electrodes (6).

FIG. 1

**Description**

Technical Field

The present invention relates to a variable spectral element.

Background Art

Heretofore, variable spectral elements of the Fabry-Perot type that alter the wavelength of transmitted light by adjusting the intersurface distance between two plate-like optical substrates have been known (for example, refer to Patent Document 1).

This variable spectral element is equipped with reflection films and capacitance sensor electrodes on opposing surfaces of the respective optical substrates, detects the distance between the optical substrates based on the electrostatic capacitance between the capacitance sensor electrodes, and is capable of fine-scale adjustment of the intersurface distance by controlling the drive voltage of actuators.

> Patent Document 1: Japanese Unexamined Patent Application, Publication No. 2002-277758.

Disclosure of Invention

Such a Fabry-Perot type variable spectral element, due to the interference of light, is capable of periodically and selectively obtaining a transmission spectral peak at wavelength λ, which resonates with the intersurface distance d between the pair of reflection films, as indicated by Equation (1).

$$2nd\cos\theta = m\lambda \quad (1)$$

where n = refractive index of the medium in the intersurface distance d between the pair of reflection films
d = intersurface distance between the pair of reflection films
λ = wavelength
θ = incident angle to reflection films
m = order (integer)
The free spectral range (FSR) at this time is expressed by Equation (2).

$$FSR = \lambda^2/2nd \quad (2)$$

Accordingly, when using such a Fabry-Perot-type variable spectral element in the visible range, it is desirable to adjust the spacing between the reflection films within the range of a few $\mu$m or less to ensure the free spectral range.

However, when the distance between the reflection films is extremely small, the reflection films come in contact with each other during assembly and operation and become attached to each other due to their highly precise smoothness, causing the problem of so-called optical contact, and avoiding this results in a problem of not being able to ensure a sufficiently small distance between the reflection films on the optical substrates.
Even when a high degree of parallelism is achieved, obstacles to ensuring a sufficiently small distance between the reflection films in the vicinity of a central section may arise from dust settling on parts of the optical substrates other than the reflection films or from formation of projections due to damage thereof.

The present invention has been conceived in consideration of the above-described situation, and an object thereof is to provide a variable spectral element that is capable of obtaining desired spectral characteristics by bringing reflection films sufficiently close together while avoiding optical contact between the reflection films.

In order to achieve the above-described object, the present invention provides the following solutions.
One aspect of the variable spectral element according to the present invention includes a pair of optical substrates that oppose each other with a gap therebetween; two mutually opposing reflection films respectively disposed on the opposing surfaces of the optical substrates; two mutually opposing sensor electrodes that are disposed respectively on the sides where the reflection films are disposed, and that form a distance sensor that detects the distance between the optical substrates; and an actuator that changes the distance between the optical substrates by relatively moving the optical substrates; wherein the distance between the opposing surfaces of the two reflection films (d1) is larger than the distance between the opposing surfaces of the two sensor electrodes (d2).

In the above-described aspect, the gap-side surfaces of the sensor electrodes may be disposed at positions farther than the gap-side surfaces of the reflection films with respect to the surfaces of the optical substrates on which the reflection films are provided.

In addition, in the above-described aspect, the following conditional expression (1) may be satisfied:

$$d1 - d2 \leq \lambda_0/2 \quad (1)$$

where $\lambda_0$ is the wavelength of light transmitted between the optical substrates depending on the distance between the optical substrates.
In the above-described aspect, the following conditional expression (3) may also be satisfied:

$$S \leq \lambda_0/4 \qquad (3)$$

where $\lambda_0$ is the wavelength of light transmitted between the optical substrates depending on the distance between the optical substrates, and S is a level difference formed between the reflection films and the sensor electrodes.

In the above-described aspect, the following conditional expression (4) may be satisfied:

$$20 \text{ nm} \leq S \qquad (4)$$

In particular, when using it as a spectroscopic device for fluorescent proteins, fluorescent agents, autofluorescence, etc., used for research in the fields of biotechnology, medicine, etc., it is preferable to adjust the distance between the optical substrates using the actuators so that the distance between the surfaces of the reflection films is within a range of 2 $\mu$m or less, in order to ensure a free spectral range of at least several tens of nanometers or above in the visible range.

In addition, in the above-described aspect, the sensor electrodes may be further provided with protective films on the gap sides thereof; and the surfaces of the reflection films may be disposed at positions farther than the surfaces of the protective films with respect to the surfaces of the optical substrates on which the reflection films are provided.

In addition, in the above-described aspect, the distance sensor may be a capacitance sensor that detects the distance between the optical substrates based on electrostatic capacitance formed between the two sensor electrodes.

In addition, in the above-described aspect, the sensor electrodes may be disposed relatively outward with respect to the reflection films.

In addition, in the above-described aspect, a plurality of the actuators may be provided with spaces therebetween in the circumferential direction, and each of the actuators may be driven and controlled independently.

According to the present invention, it is possible to obtain desired spectral characteristics by bringing reflection films sufficiently close together while avoiding optical contact between the reflection films.

Brief Description of Drawings

[Fig. 1] Fig. 1 is a longitudinal sectional view showing a variable spectral element according to an embodiment of the present invention.
[Fig. 2] Fig. 2 is a plan view of optical substrates provided in the variable spectral element in Fig. 1.

[Fig. 3] Fig. 3 is a longitudinal sectional view showing optical substrates provided in the variable spectral element in Fig. 1.
[Fig. 4] Fig. 4 is a longitudinal sectional view showing optical substrates in a first modification of the variable spectral element in Fig. 1.
[Fig. 5] Fig. 5 is a longitudinal sectional view showing optical substrates in a second modification of the variable spectral element in Fig. 1.
[Fig. 6] Fig. 6 is a plan view showing optical substrates in a third modification of the variable spectral element in Fig. 1.
[Fig. 7] Fig. 7 is a longitudinal sectional view showing optical substrates in a fourth modification of the variable spectral element in Fig. 1.
[Fig. 8] Fig. 8 is a longitudinal sectional view showing optical substrates in a fifth modification of the variable spectral element in Fig. 1.
[Fig. 9] Fig. 9 is a longitudinal sectional view showing optical substrates in a sixth modification of the variable spectral element in Fig. 1.
[Fig. 10] Fig. 10 is a longitudinal sectional view of a seventh modification of the variable spectral element in Fig. 1, illustrating an example of wiring that connects to capacitance sensor electrodes.
[Fig. 11] Fig. 11 is a longitudinal sectional view of an eighth modification of the variable spectral element in Fig. 1, illustrating an example of wiring that connects to capacitance sensor electrodes.
[Fig. 12] Fig. 12 is a longitudinal sectional view of a ninth modification of the variable spectral element in Fig. 1, illustrating an example of wiring that connects to capacitance sensor electrodes.

Explanation of Reference Signs

1:  variable spectral element
2, 3: optical substrate
4:  actuator
5:  reflection film
6:  capacitance sensor electrode
9:  protective film

Best Mode for Carrying Out the Invention

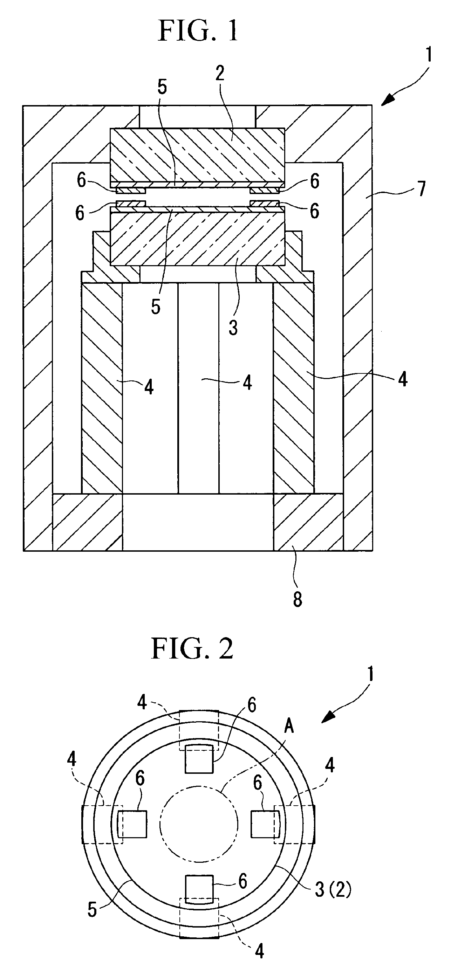

A variable spectral element 1 according to an embodiment of the present invention will be described below with reference to Fig. 1 to Fig. 3.
As shown in Fig. 1, the variable spectral element 1 according to the present embodiment includes two circular plate-shaped optical substrates 2 and 3, disposed with a gap therebetween; and actuators 4, such as piezoelectric elements, that are driven to adjust the gap between the two optical substrates 2 and 3.
Opposing surfaces of the respective optical substrates 2 and 3, as shown in Fig. 2, are formed flat with a high degree of planarity, and are provided with reflection films 5, formed of circular dielectric multilayer films, on the entire surface, including an optically effective diameter A near its center. In addition, the outer peripheral parts of the gap-side surfaces of the reflection films 5 are provided with a plurality of capacitance sensor electrodes 6 (for example, 4 pairs) disposed with spaces therebetween in the circumferential direction. The capacitance sensor electrodes 6, disposed on the respective optical substrates 2 and 3, include metal films that are disposed at mutually opposing positions. Therefore, the gap between the optical substrates 2 and 3 can be detected by using the electrostatic capacitance of parallel plate capacitors formed between the capacitance sensor electrodes 6. Reference numerals 7 and 8 in the figures are support members that support the optical substrates 2 and 3 and the actuators.

As shown in Fig. 2, the actuators 4 are disposed, for example, in four locations with spaces therebetween in the circumferential direction, matching the capacitance sensor electrodes 6. Each of the actuators 4 can be independently expanded and contracted by altering the applied voltage so as to change the distance between and the tilt angle of the optical substrates 2 and 3. At this time, the distance and tilt angle of the optical substrates 2 and 3 can be precisely adjusted through feedback control of the voltages applied to the actuators 4 based on signals detected by the capacitance sensor electrodes 6.

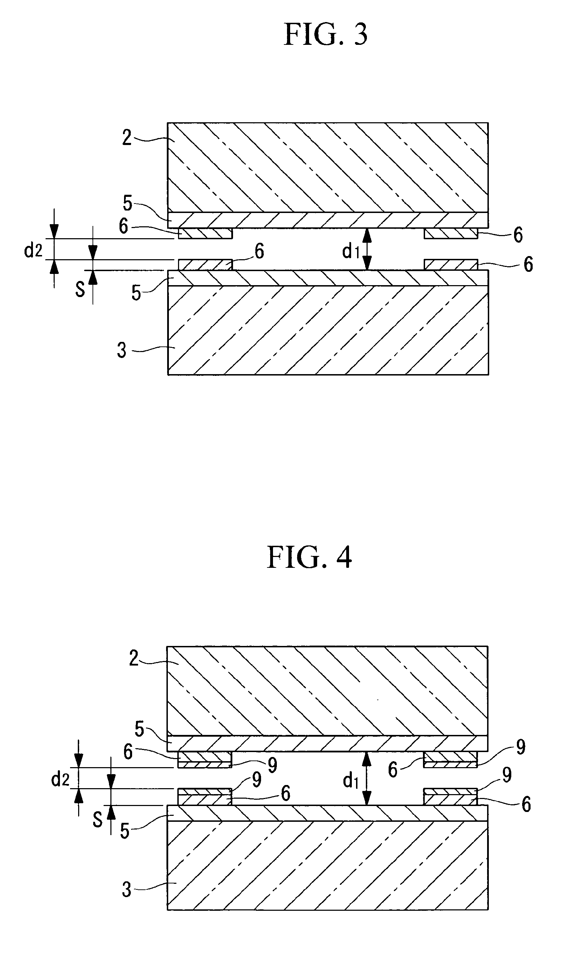

In the variable spectral element 1 according to this embodiment, as shown in Fig. 3, the capacitance sensor electrodes 6 are disposed on the opposing surfaces of the reflection films 5 disposed on the respective optical substrates 2 and 3. For example, the reflection films 5 are about 800 nm thick, and the capacitance sensor electrodes 6 are about 50 nm thick. As a result, the surfaces of the capacitance sensor electrodes 6 are positioned at one level above the surfaces of the reflection films 5, forming a level difference S between the two that corresponds to the thickness of the capacitance sensor electrodes 6. In other words, the surfaces of the capacitance sensor electrodes 6 are positioned further than the surfaces of the reflection films 5 with respect to the surfaces of the optical substrates on which the reflection films 5 are disposed; the distance d1 between surfaces of the opposing reflection films is set to be greater than the distance d2 between the surfaces of the sensor electrodes, by an amount that corresponds to the thickness of two layers of the capacitance sensor electrodes 6.

The thickness of the capacitance sensor electrodes 6, i.e., the level difference S formed between the reflection films 5 and the capacitance sensor electrodes 6, is set to be 1/4 or less of the wavelength $\lambda_0$ of light transmitted between the optical substrates 2 and 3 depending on the distance between the optical substrates 2 and 3. In other words, the minimum value of the intersurface distance d1 between the opposing reflection films is configured so as to be equal to or less than the wavelength $\lambda_0$ of light transmitted between the optical substrates 2 and 3 when the variable spectral element 1 is in use.
Therefore, the following conditional expression (1) is satisfied:

$$d1 - d2 \leq \lambda_0/2 \quad (1)$$

Note that, from Fig. 3, the intersurface distance d1 between the opposing reflection films, the intersurface distance d2 between the sensor electrodes, and the thickness of the capacitance sensor electrodes 6, i.e., the level difference S formed between the reflection films 5 and the capacitance sensor electrodes 6, satisfy the following conditional expression (2):

$$d1 = d2 + 2 \times S \quad (2)$$

From conditional expression (1) and conditional expression (2), the upper limit of the level difference S satisfies the following conditional expression (3):

$$S \leq \lambda_0/4 \quad (3)$$

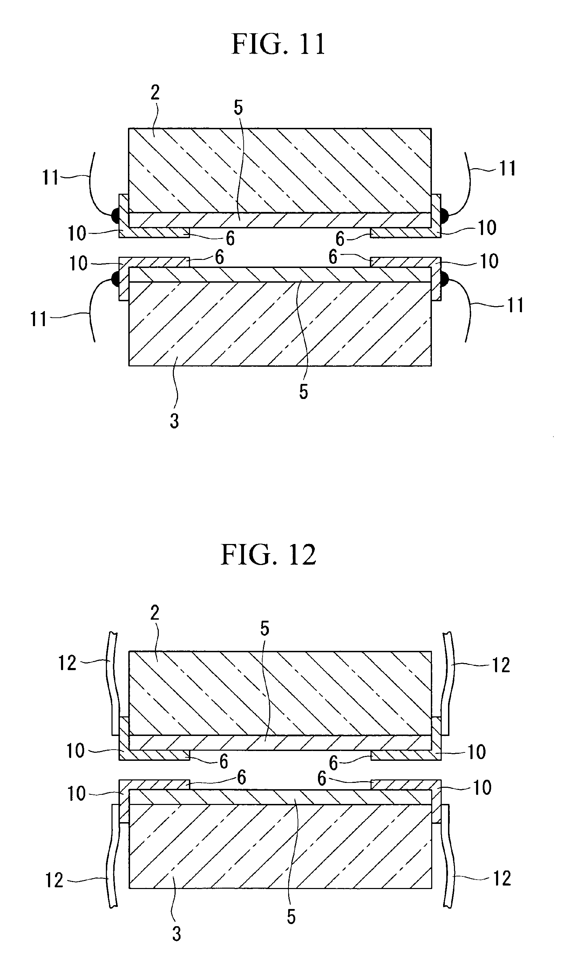

On the other hand, the capacitance sensor electrodes are manufactured by masking the surfaces of the optical substrates, then applying a coating of a metal film, such as gold (Au) or aluminum (Al). As for the method of connecting wiring to the capacitance sensor electrodes 6, as shown in Fig. 11, wiring patterns 10 that connect to the capacitance sensor electrodes 6 may be extended to side surfaces of the optical substrates 2 and 3, so as to connect with wires 11 in positions away from opposing surfaces of the optical substrates 2 and 3. The wires 11 may be connected to the wiring patterns 10 by, for example, wire bonding. Note that connecting parts of the wiring pattern 10 that connect to the capacitance sensor electrodes 6 are subjected to a load from tensile stress and the like. In particular, with wire bonding, the load is extremely high because the connecting parts are formed by applying thermal vibrations produced by ultrasonic waves. Consequently, a problem arises in that the capacitance sensor electrodes 6 peel off when the thickness S is too small. Therefore, in order to avoid this problem of film peeling, it is desirable that the lower limit of the thickness of the capacitance sensor electrodes 6, i.e., the level difference S formed between the reflection films 5 and the capacitance sensor electrodes 6, satisfy the following conditional expression (4):

$$20 \text{ nm} \leq S \quad (4)$$

The operation of the thus-configured variable spectral element 1 of the present embodiment will be described below.

The variable spectral element 1 according to this embodiment, is assembled so that the reflection films 5 and the capacitance sensor electrodes 6 are made to oppose each other, and the two optical substrates 2 and 3 are disposed opposite each other with a gap therebetween; therefore, it is possible to detect the gap between the optical substrates 2 and 3 based on the electrostatic capacitance formed between the sensor electrodes 6, and to precisely adjust the gap by controlling the actuators 4 based on the detected distance, while maintaining the parallel state of the two optical substrates 2 and 3.

When using such a Fabry-Perot-type variable spectral element in the visible range, in particular, as a spectroscopic device for fluorescent proteins, fluorescent agents, autofluorescence, etc., used for research in the fields of biotechnology, medicine, etc., a free spectral range of at least several tens of nanometers or above needs to be ensured. Therefore, in the variable spectral element 1, it is desirable to adjust the distance between the optical substrates using the actuators so that the distance between the surfaces of the reflection films is within a range of 2 $\mu$m or less.

In this case, with the variable spectral element 1 according to this embodiment, the capacitance sensor electrodes 6 are provided on the gap-side surfaces of the reflection films 5 provided on the opposing surfaces on the optical substrates 2 and 3, and the surfaces of the capacitance sensor electrodes 6 are positioned at one level above the surfaces of the reflection films 5. Consequently, the capacitance sensor electrodes 6 act like stoppers, and the capacitance sensor electrodes 6 abut with each other sooner than the reflection films 5 even when the optical substrates 2 and 3 are brought together, during assembly and operation, so as to make the distance between the reflection films 5 several micrometers or less.

In other words, because the distance between the reflection films 5 is greater than the distance between the capacitance sensor electrodes 6, optical contact, caused by contacting the reflection films 5 with each other, does not occur even when the capacitance sensor electrodes 6 come in contact with each other.

Accordingly, it is possible to change the distance between the optical substrates 2 and 3 so as to make the minimum value of the intersurface distance between the reflection films 5 up to 100 nm. Thus, the reflection films 5 can be brought together to a sufficiently close distance without consideration for optical contact between the reflection films 5, thus facilitating assembly and adjusting of the intersurface distance.

In addition, in assembling the variable spectral element 1, the capacitance sensor electrodes 6 are allowed to abut against each other while avoiding contact between the reflection films. Therefore, when the variable spectral element 1 is in use, the intersurface distance between the reflection films 5 can easily be set at equal to or less than an intersurface distance necessary for acquiring light within a desired wavelength band.

In addition, by abutting the capacitance sensor electrodes 6 with each other during assembly, a high degree of parallelism, such as 30 seconds or less, can be obtained. Consequently, adjustment of the parallelism (tilt) between the optical substrates 2 and 3 after assembly can be minimized, and the motion range of the actuators 4 can also be reduced.

It is not necessary to adjust the intersurface distance between the reflection films 5 during assembly nor is it necessary to mount the optical substrates 2 and 3 with a high degree of parallelism; therefore, assembling the variable spectral element 1 can be simplified, while allowing for miniaturization of the actuators 4 themselves, thereby realizing miniaturization of the variable spectral element 1. In addition, as manufacturing becomes simplified, it is possible to provide the variable spectral element 1 at lower cost by reducing the number of processes.

With the variable spectral element 1 according to this embodiment, highly precise parallelism can easily be obtained without having to mount the optical substrates 2 and 3 with a high degree of parallelism during assembly, and by correcting the tilting of the optical substrates 2 and 3 using feedback control of drive signals to the actuators 4 based on signals from the capacitance sensor electrodes 6 after assembly.

During the operation of the variable spectral element 1, the drive voltages of the actuators 4 are controlled based on the minimum distance between the optical substrates 2 and 3 that is detected using the electrostatic capacitance obtained during assembly when the opposing capacitance sensor electrodes 6 abut each other, thereby allowing for fine-scale adjustment of the intersurface distance until the reflection films 5 are stable and sufficiently close to each other, without having to abut the surfaces of the capacitance sensor electrodes 6 again.

Accordingly, it is possible to change the distance between the optical substrates 2 and 3 so as to make the minimum value of the intersurface distance between the reflection films 5 up to 100 nm. As a result, the optical substrates 2 and 3 can be brought together so as to make the intersurface distance between the reflection films 5 correspond to exactly half of a desired wavelength (for example, when $\lambda$ = approximately 400 nm, the intersurface distance is approximately 200 nm); and to allow for selective transmission of light with that wavelength only.

In addition, damage to the capacitance sensor electrodes 6 can be prevented because the capacitance sensor electrodes 6 do not come in contact with each other during the operation of the variable spectral element 1. Consequently, the reflection films 5 can be brought together without being blocked by dust attached on the capacitance sensor electrodes 6 or projections formed on the capacitance sensor electrodes 6 due to damage thereof.

The reflection films and the capacitance sensor electrodes are manufactured by masking and coating the optical substrate surfaces; and in this embodiment, the capacitance sensor electrodes are disposed on the top-surfaces of the reflection films, thereby simplifying the manufacturing processes, thus reducing the cost of the spectral element. Because the area for film formation on the reflective surface has little extra room with respect to the light bundle (effective light bundle) used for spectral separation, normally, miniaturizing a device, without having the light bundle shaded, requires tightening the allowable error during production with respect to the diameter of the reflective surface and to the concentricity of the optical substrates and the reflective surfaces.

In the configuration of the this embodiment, formation of a reflective film on the entire optical surface of an optical substrate allows enlarging the allowable error for the inner diameter of masking and coaxiality between the optical substrate and masking, while maintaining miniaturization of the device, and without shading the effective light bundle; therefore, it is possible to reduce the manufacturing cost of masking, to reduce assembly and adjustment costs of the spectral element, and to improve yield.

In the variable spectral element 1 according to this embodiment, the surfaces of the capacitance sensor electrodes 6 are disposed at one level above the surfaces of the reflection films 5; however, as shown in Fig 4, protective films 9 that are made of, for example, $SiO_2$, may be provided on the surfaces of the capacitance sensor electrodes 6 in order to more certainly prevent damage from interference of the capacitance sensor electrodes 6, and the surfaces of the protective films 9 may be disposed so as to be higher than the surfaces of the reflection films 5.

As shown in Fig. 4, the combined thickness of the capacitance sensor electrode 6 and the protective film corresponds to the level difference S formed relative to the reflection film 5 and satisfies the conditional expressions 3 and 4.

Note that the material for the protective films is not limited to $SiO_2$.

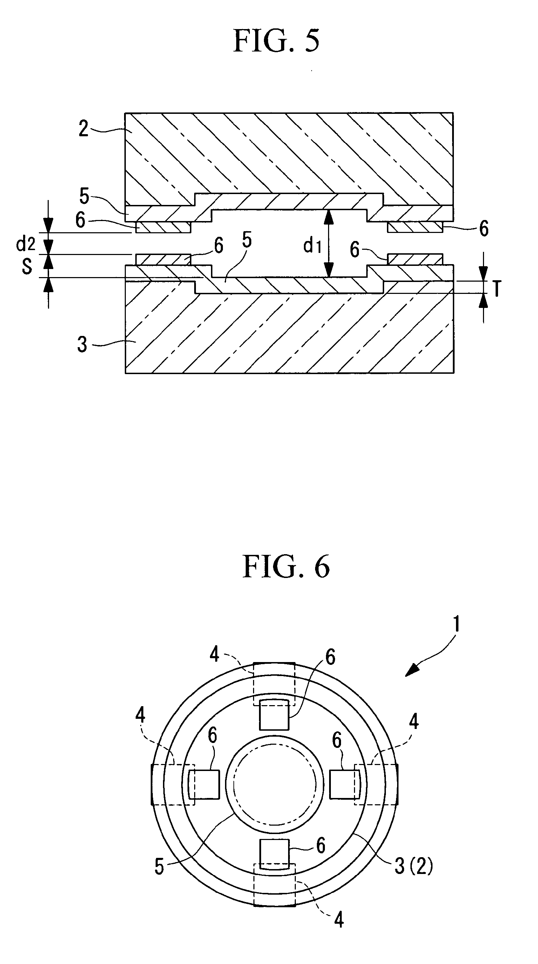

In addition, as shown in Fig. 5, a level difference T may be provided on the opposing surfaces of the optical substrates 2 and 3, and the level difference S may be formed between the surfaces of the capacitance sensor electrodes 6 and the surfaces of the reflection films 5 so as to correspond to the height of the level difference T provided on the optical substrates and the thickness of the capacitance sensor electrodes 6.

In the variable spectral element 1 according to this embodiment, the reflection films 5 are disposed on the entire surface of the opposing surfaces of the respective optical substrates 2 and 3; instead, as shown in Fig. 6, circular reflection films 5 may be disposed on the opposing surfaces of the respective optical substrates 2 and 3 in the areas near the center that include the optically effective diameter A; and the capacitance sensor electrodes 6 may be disposed on the opposing surfaces of the optical substrates 2 and 3 radially outward of the reflection films 5.

By doing so, as compared with the first embodiment, it is possible to make the area of the reflection films smaller; to make the stress applied to the optical substrates 2 and 3 by the reflection films smaller; and to improve the flatness (surface precision) of the optical substrates and reflection films. In a Fabry-Perot type variable spectral element, greater spectral peaks can be obtained with an increasing flatness (surface precision) of the reflecting surfaces, and therefore, greater spectral peaks can be obtained with the configuration of the second embodiment.

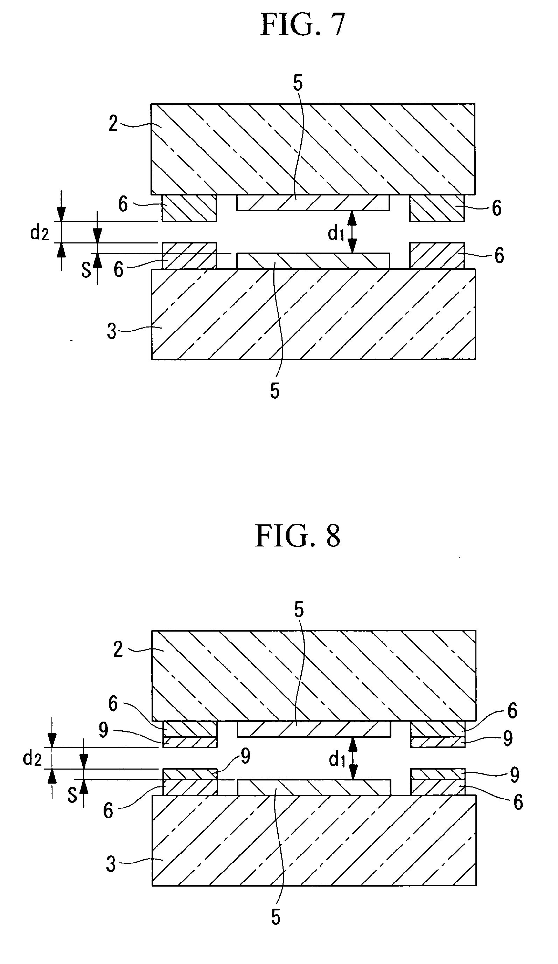

In this case, as shown in Fig. 7, the capacitance sensor electrodes 6, with a greater thickness than the reflection films 5, are disposed on the outer peripheral side of the optical substrates 2 and 3, so as to form the level difference S between the surfaces of the capacitance sensor electrodes 6 and the surfaces of the reflection films 5, corresponding to the thickness difference between the two. Thus results similar to the above-described results can be achieved by disposing the surfaces of the capacitance sensor electrodes 6 higher than the surfaces of the reflection films 5. Further, it is possible to reduce the area of the reflection films and to make the stress applied to the optical substrates 2 and 3 by the reflection films smaller than in the first embodiment.

In addition, as shown in Fig. 8, the reflection films 5 and the capacitance sensor electrodes 6 of substantially equal thickness may be disposed on the outer peripheral side of the optical substrates 2 and 3, and the protective films 9 may be disposed on the surfaces of the capacitance sensor electrodes 6 so as to form the level difference S, corresponding to the thickness of the protective films 9, between the surfaces of the protective films 9 and the surfaces of the reflection films 5. When forming the capacitance sensor electrodes 6 and the reflection films 5 of the same materials, film formation can be performed simultaneously for these, and thus the manufacturing processes can be simplified.

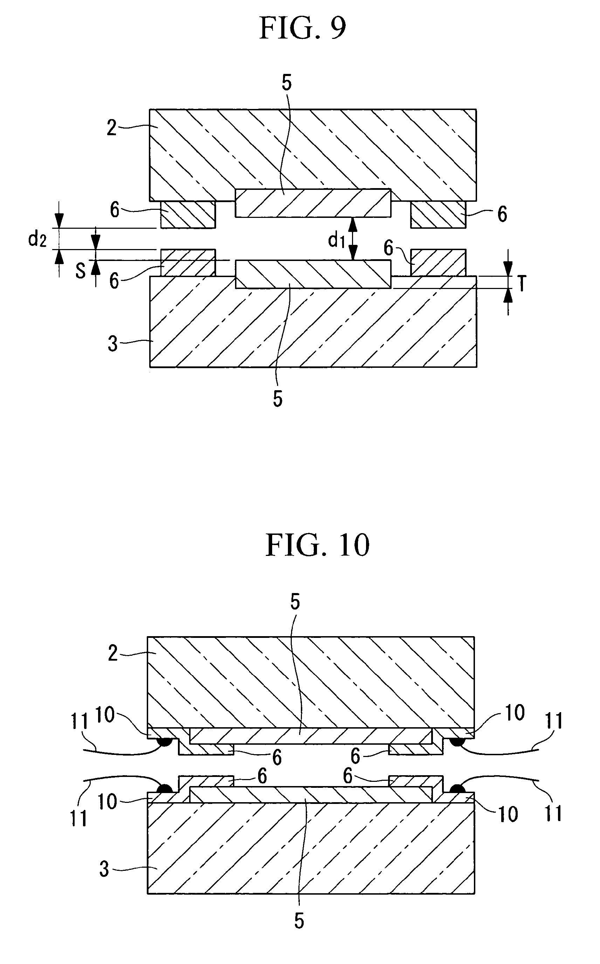

In addition, as shown in Fig. 9, the level difference T may be provided on the opposing surfaces of the optical substrates 2 and 3; and the reflection films 5 and the capacitance sensor electrodes 6 of substantially equal thickness may be disposed respectively on the surfaces of the optical substrates 2 and 3 that differ in height, so as to form the level difference S, corresponding to the height of the level difference T disposed on the optical substrates. Further, when forming the capacitance sensor electrodes 6 and the reflection films 5 of the same materials, film formation can be performed simultaneously for these, and thus the manufacturing processes can be simplified.

As for methods of connecting wires to the capacitance sensor electrodes 6, as shown in Fig. 10, the reflection films 5 may be formed only in the central part of the optical substrates 2 and 3; wiring patterns 10 that connect to the capacitance sensor electrodes 6 may be shifted down, by the thickness of the reflection films 5, toward the optical substrates 2 and 3 and extended radially outward of the reflection films 5; and wires 11 may be connected to the wiring pattern 10, for example, by wire bonding. Accordingly, space for connecting parts for the wires 11 can be secured while avoiding interference among the wires 11.

As shown in Fig. 11, the wiring patterns 10 that connect to the capacitance sensor electrodes 6 may be extended to side surfaces of the optical substrates 2 and 3 so as to connect with the wires 11 in positions away from the opposing surfaces of the optical substrates 2 and 3.

As for methods of connecting the wires 11 to the capacitance sensor electrodes 6, aside from methods of electrical connection, for example, by wire bonding, as shown in Fig. 10 and Fig 11, electrical connection via flexible substrates 12, as shown in Fig. 12, may be employed.

Although the above-described embodiments use the electrostatics capacitance between the capacitance sensor electrodes 6 disposed on both optical substrates 2 and 3 as sensors for detecting the distance between the optical substrates 2 and 3, the variable spectral element 1 according to the present invention is not limited to this. For example, it is possible to employ eddy current type sensors that use the magnetic mutual induction between respective electrodes disposed on the surfaces of the optical substrates 2 and 3.

## Claims

1. A variable spectral element comprising:

    a pair of optical substrates that oppose each other with a gap therebetween;
    two mutually opposing reflection films respectively disposed on the opposing surfaces of the optical substrates; two mutually opposing sensor electrodes that are disposed respectively on the sides where the reflection films are disposed, and that form a distance sensor that detects the distance between the optical substrates; and
    an actuator that changes the distance between the optical substrates by relatively moving the optical substrates;
    wherein the distance between the opposing surfaces of the two reflection films (d1) is larger than the distance between the opposing surfaces of the two sensor electrodes (d2).

2. The variable spectral element according to Claim 1 wherein the gap-side surfaces of the sensor electrodes are disposed at positions further than the gap-side surfaces of the reflection films with respect to the surfaces of the optical substrates on which the reflection films are provided.

3. The variable spectral element according to Claim 1, wherein the following conditional expression (1) is satisfied:

$$d1 - d2 \leq \lambda_0/2 \qquad (1)$$

where $\lambda_0$ is the wavelength of light transmitted between the optical substrates depending on the distance between the optical substrates.

4. The variable spectral element according to Claim 1, wherein the sensor electrodes are further provided with protective films on the gap sides thereof; and the surfaces of the protective films are disposed at positions farther than the surfaces of the reflection films with respect to the surfaces of the optical substrates on which the reflection films are provided.

5. The variable spectral element according to Claim 1, wherein the distance sensor is a capacitance sensor that detects the distance between the optical substrates using electrostatic capacitance formed between the two sensor electrodes.

6. The variable spectral element according to Claim 1, wherein the sensor electrodes are disposed relatively outward with respect to the reflection films.

7. The variable spectral element according to Claim 1, wherein a plurality of the actuators are provided with spaces therebetween in the circumferential direction, and
each of the actuators is driven and controlled independently.

8. The variable spectral element according to Claim 1, wherein the following conditional expression (3) is satisfied:

$$S \leq \lambda_0/4 \qquad (3)$$

where $\lambda_0$ is the wavelength of light transmitted between the optical substrates depending on the distance between the optical substrates, and S is a level difference formed between the reflection films and the sensor electrodes.

9. The variable spectral element according to Claim 8, wherein the following conditional expression (4) is satisfied

$$20 \ nm \leq S \qquad (4).$$

# FIG. 1

# FIG. 2

# FIG. 3

# FIG. 4

# FIG. 5

# FIG. 6

# FIG. 7

# FIG. 8

# FIG. 9

# FIG. 10

# FIG. 11

# FIG. 12

<table>
<tr><td align="center">**INTERNATIONAL SEARCH REPORT**</td><td>International application No.<br>PCT/JP2008/052278</td></tr>
</table>

**A. CLASSIFICATION OF SUBJECT MATTER**
*G02B26/00*(2006.01)i, *G01J3/26*(2006.01)i, *G02B5/28*(2006.01)i

According to International Patent Classification (IPC) or to both national classification and IPC

**B. FIELDS SEARCHED**

Minimum documentation searched (classification system followed by classification symbols)
G02B26/00, G01J3/26, G02B5/28

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2003-185941 A  (Yokogawa Electric Corp.),<br>03 July, 2003 (03.07.03),<br>Fig. 2; Par. Nos. [0037], [0041]<br>(Family: none) | 1,2,4-7<br>3,8,9 |
| X<br>Y | JP 2003-215473 A  (Yokogawa Electric Corp.),<br>30 July, 2003 (30.07.03),<br>Fig. 2; Par. Nos. [0045], [0051]<br>(Family: none) | 1,2,4-7<br>3,8,9 |
| X<br>Y | JP 1-94312 A  (Sharp Corp.),<br>13 April, 1989 (13.04.89),<br>Fig. 5; page 4, upper right column, line 4 to<br>lower right column, line 8<br>(Family: none) | 1,2,4-6<br>3,8,9 |

| ☒ | Further documents are listed in the continuation of Box C. | ☐ | See patent family annex. |
|---|---|---|---|

| | |
|---|---|
| * Special categories of cited documents:<br>"A" document defining the general state of the art which is not considered   to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>08 May, 2008 (08.05.08) | Date of mailing of the international search report<br>20 May, 2008 (20.05.08) |
|---|---|
| Name and mailing address of the ISA/<br>Japanese Patent Office | Authorized officer |
| Facsimile No. | Telephone No. |

Form PCT/ISA/210 (second sheet) (April 2007)

EP 2 120 082 A1

**INTERNATIONAL SEARCH REPORT**

| International application No. |
|---|
| PCT/JP2008/052278 |

C (Continuation).    DOCUMENTS CONSIDERED TO BE RELEVANT

| Category* | Citation of document, with indication, where appropriate, of the relevant passages | Relevant to claim No. |
|---|---|---|
| Y | JP 2-257676 A  (Sharp Corp.),<br>18 October, 1990 (18.10.90),<br>Page 3, upper left column, line 20 to upper<br>right column, line 1<br>(Family: none) | 3,8,9 |

Form PCT/ISA/210 (continuation of second sheet) (April 2007)

15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002277758 A